Europäisches Patentamt

European Patent Office

Office européen des brevets

(11) Veröffentlichungsnummer: **0 522 394 A2**

## EUROPÄISCHE PATENTANMELDUNG

(21) Anmeldenummer: **92110956.7**

(22) Anmeldetag: **29.06.92**

(51) Int. Cl.5: **C08K 5/00**, C08G 18/32,
//(C08K5/00,5:09,5:17),
(C08G18/32,101:00)

(30) Priorität: **11.07.91 DE 4122872**

(43) Veröffentlichungstag der Anmeldung:
**13.01.93 Patentblatt 93/02**

(84) Benannte Vertragsstaaten:
**BE DE ES FR GB IT SE**

(71) Anmelder: **BAYER AG**

**W-5090 Leverkusen 1 Bayerwerk(DE)**

(72) Erfinder: **Weber, Christian, Dr.**
**Paul-Klee-Strasse 68a**
**W-5090 Leverkusen 1(DE)**
Erfinder: **Grammes, Hartwig, Ing.-grad.**
**Reuterstrasse 14**
**W-5090 Leverkusen 1(DE)**

(54) **Formschaumstoffe.**

(57) Die Verwendung von Lösungen von Zinkcarboxylaten mit 8 bis 24 Kohlenstoffatomen in aliphatischen Polyaminen des Molekulargewichtsbreichs 131 bis 500 mit insgesamt 2 oder 3 primären, sekundären und/oder tertiären Aminstickstoffatomen und gegebenenfalls aromatischen diprimären Diaminen des Molekulargewichtsbereich 108 bis 350 als die Ausbildung einer kompakten Oberfläche bewirkende Zusatzmittel bei der Herstellung von Formschaumstoffen einer maximalen Rohdichte von 500 kg/m³ aus organischen Polyisocyanaten, Polyetherpolyolen, Kettenverlängerungsmitteln, Wasser, sowie gegebenenfalls weiteren Hilfs- und Zusatzmitteln.

EP 0 522 394 A2

Die Erfindung betrifft die Verwendung von Lösungen von Zinksalzen von Fettsäuren in aliphatischen und gegebenenfalls aromatischen Polyaminen als die Ausbildung einer kompakten Oberfläche bewirkende Zusatzmittel bei der Herstellung von Wasser-getriebenen Formschaumstoffen auf Polyurethanbasis.

Die Herstellung von Formköpern aus Polyurethanschaumstoffen mit kompakter Oberfläche durch Formverschäumung ist grundsätzlich bekannt (z.B. DE-AS 1 196 864). Sie erfolgt durch Formverschäumung eines reaktions- und schaumfähigen Gemischs aus organischen Polyisocyanaten, Verbindungen mit gegenüber Isocyanatgruppen reaktionsfähigen Gruppen und den üblichen Hilfs- und Zusatzmitteln, wobei man in die Form eine größere Menge an reaktionsfähigem Gemisch einträgt, als zum Ausfüllen des Formvolumens durch freie Verschäumung erforderlich wäre. Durch geeignete Wahl der Ausgangskomponenten, insbesondere durch geeignete Wahl ihres Molekulargewichts und ihrer Funktionalität ist es dabei möglich, sowohl weiche als auch halbharte als auch harte Formkörper herzustellen. Die dichte Außenhaut wird hierbei dadurch erreicht, daß man einerseits in die Form eine größere Menge an schaumfähigem Gemisch einträgt, als zum Ausfüllen des Formvolumens durch freie Verschäumung erforderlich wäre und andererseits als Treibmittel Fluorchlorkohlenwasserstoffe verwendet, die an der Forminnenwand unter den vorherrschenden Temperatur- und Druckbedingungen kondensieren, so daß die Treibreaktion an der Forminnenwand zum Stillstand kommt und eine kompakte Außenhaut entsteht.

Neben den genannten physikalischen Treibmitteln wird in der technischen Polyurethanchemie auch Wasser als chemisches Treibmittel in Form des durch Reaktion zwischen Wasser und Isocyanaten entstehenden Kohlendioxids verwendet. Mit diesem chemischen Treibmittel lassen sich zwar frei geschäumte Polyurethanschaumstoffe von ausgezeichneter Qualität herstellen, nicht jedoch qualitativ hochwertige Schaumstoff-Formkörper mit kompakter Oberfläche (Integralschaumstoffe). Dies liegt daran, daß das Kohlendioxid unter den üblichen Bedingungen an der Forminnenwand nicht kondensiert und somit die Treibwirkung in der Randzone nicht gebremst wird.

Wie jetzt überraschend gefunden wurde gelingt es jedoch, auch unter Verwendung von Wasser und ohne Mitverwendung der genannten physikalischen Treibmittel qualitativ hochwertige Formkörper aus Polyurethanschaumstoffen mit kompakter Oberfläche aus den üblichen Ausgangsmaterialien herzustellen, wenn bei der an sich bekannten Formverschäumung der üblichen Ausgangsmaterialien die nachstehend näher beschriebenen, erfindungswesentlichen Zusatzmittel a), die Lösungen von Zinksalzen a1) in aliphatischen Polyaminen a2) und gegebenenfalls aromatischen Diaminen a3) darstellen, mitverwendet werden.

Gegenstand der Erfindung ist demzufolge die Verwendung von

a) Lösungen von

a1) 100 Gew.-Teilen einer Zinksalzkomponente, bestehend aus mindestens einem Zinksalz einer geradkettigen oder verzweigten, gesättigten oder ungesättigten Fettsäure mit 8 bis 24 Kohlenstoffatomen in

a2) 40 bis 200 Gew.-Teilen einer aliphatischen Aminkomponente, bestehend aus mindestens einem aliphatischen Polyamin des Molekulargewichtsbereichs 131 bis 500 mit insgesamt 2 bis 4 primären, sekundären und/oder tertiären Aminstickstoffatomen, und gegebenenfalls

a3) bis zu 200 Gew.-Teilen einer aromatischen Aminkomponente, bestehend aus mindestens einem Diamin mit aromatisch gebundenen primären Aminogruppen des Molekulargewichtsbereichs 108 bis 350,

als die Ausbildung einer kompakten Oberfläche bewirkende Zusatzmittel bei der Herstellung von Formschaumstoffen einer maximalen Rohdichte von 500 kg/m$^3$ durch Formverschäumung eines Reaktionsgemischs, bestehend im wesentlichen aus

b) einer Polyisocyanatkomponente, bestehend aus mindestens einem Polyisocyanat mit aromatisch gebundenen Isocyanatgruppen,

c) einer Polyetherkomponente, bestehend aus mindestens einem Polyetherpolyol mit 2 bis 4 alkoholischen Hydroxylgruppen und einem Molekulargewicht von 500 bis 12 000,

d) einer Kettenverlängerer- oder Vernetzerkomponente, bestehend aus

d1) mindestens einem zwei- oder dreiwertigen, gegebenenfalls Ethergruppen aufweisenden Alkohol mit primären und/oder sekundären Hydroxylgruppen des Molekulargewichtsbereichs 62 bis 499 und gegebenenfalls

d2) mindestens einem aromatischen diprimären Diamin des Molekulargewichtsbereichs 108 bis 350,

e) Wasser, sowie gegebenenfalls

f) weiteren Hilfs- und Zusatzmitteln,

wobei die Komponenten a) und c) bis f) zu einer NCO-reaktiven Komponente vereinigt und diese mit der Polyisocyanatkomponente b) unter Einhaltung einer Isocyanatkennzahl von 70 bis 150 zur Reaktion gebracht wird.

Lösungen von Zinksalzen der Art der erfindungswesentlichen Zusatzmittel a) und ihre Verwendung bei

2

der Herstellung von Formkunststoffen auf Polyurethanbasis sind zwar bereits aus einer Reihe von Vorveröffentlichungen bekannt (vgl. z.B. EP-A-0 119 471, DE-OS 36 39 502, US-PS 4 519 965, US-PS 4 766 172 oder US-PS 4 895 879), jedoch dient der Zusatz der genannten Lösungen gemäß diesen Vorveröffentlichungen ausschließlich der Verbesserung der selbsttrennenden Eigenschaften der resultierenden Formkörper, die im übrigen vorzugsweise eine oberhalb 0,8 g/cm$^3$ liegende Dichte aufweisen und demzufolge im allgemeinen ohne Treibmittel hergestellt werden. Jedenfalls ist den genannten Vorveröffentlichungen nicht der geringste Hinweis auf die jetzt überraschend aufgefundene Wirkung der erfindungswesentlichen Lösungen a) zu entnehmen. Die erfindungswesentlichen Zusatzmittel a) bewirken nicht nur die Bildung einer kompakten Oberfläche sondern führen zu besseren mechanischen Eigenschaften der Formkörper (z.B. geringerer Abrieb der Randzone), zu einer gleichmäßigen Pigmentverteilung (keine Schlieren) und höheren UV-Beständigkeit bei unlackierten Formteilen, sowie einer besseren Lackierbarkeit.

Die Komponente a1) besteht aus mindestens einem Zinksalz einer linearen oder verzweigten, gegebenenfalls olefinisch ungesättigten Fettsäure mit 8 bis 24, vorzugsweise 12 bis 18 Kohlenstoffatomen. Geeignet sind beispielsweise die in US-PS 4 519 965, Kolonne 3, Zeilen 36-61 genannten Zinksalze, wobei auch erfindungsgemäß die Verwendung von technischen Zinkstearaten bevorzugt ist.

Die Komponente a2) besteht aus mindestens einem aliphatischen Polyamin des Molekulargewichtsbereichs 131 bis 500 mit insgesamt 2 bis 4, vorzugsweise 2 bis 3 primären, sekundären und/oder tertiären Aminstickstoffatomen. Geeignet sind beispielsweise die in den genannten Vorveröffentlichungen als Verträglichmacher für Zinksalze empfohlenen aliphatischen Polyamine. Besonders gut geeignet sind beispielsweise die Anlagerungsprodukte von 4 bis 6, vorzugsweise 5 Mol Propylenoxid an Ethylendiamin, endständige primäre Aminogruppen aufweisende Polyetheramine, wie insbesondere die Aminierungsprodukte eines ungefähren Molekulargewichts 300 bis 500 von Propylenglykolen wie beispielsweise das Polyetherdiamin, welches von der Firma Texaco unter der Bezeichnung ®Jeffamine 400 angeboten wird, Bis-(3-dimethylaminopropyl)amin, N-(2-Dimethylaminoethyl)-ethylendiamin oder beliebige Gemische derartiger Polyamine. In den erfindungswesentlichen Lösungen a) liegen pro 100 Gew.-Teilen der Komponente a1) 40 bis 200 Gew.-Teile, vorzugsweise 50 bis 150 Gew.-Teile der Komponente a2) vor.

Die erfindungswesentlichen Lösungen a) können neben den Komponenten a1) und a2) gegebenenfalls auch noch a3) aromatische Diamine des Molekulargewichtsbereichs 108 bis 350 in einer Menge von bis zu 200 Gew.-Teilen, vorzugsweise von bis zu 120 Gew.-Teilen, pro 100 Gew.-Teilen der Komponente a1) enthalten. Als Komponente a3) geeignete aromatische Diamine sind beispielsweise die in EP-B-00 81 701, Kolonne 5, Zeile 58 bis Kolonne 6, Zeile 34 genannten Verbindungen, wobei auch erfindungsgemäß die dort als bevorzugt herausgestellten Diamine bevorzugt verwendet werden.

Auch erfindungsgemäß sind 1-Methyl-3,5-diethyl-2,4-diaminobenzol und seine technischen Gemische mit 1-Methyl-3,5-diethyl-2,6-diaminobenzol als Komponente a3) bevorzugt.

Als Polyisocyanatkomponente b) eignen sich beliebige Polyisocyanate oder Polyisocyanatgemische mit aromatisch gebundenen Isocyanatgruppen. Gut geeignet sind beispielsweise die in EP-B-00 81 701, Kolonne 3, Zeile 30 bis Kolonne 4, Zeile 25 genannten Polyisocyanate, wobei die dort als bevorzugt herausgestellten Polyisocyanate auch erfindungsgemäß bevorzugt sind. Besonders gut geeignet sind Urethangruppen aufweisende Polyisocyanate, wie sie beispielsweise durch Umsetzung von 1 Mol 4,4'-Diisocyanatodiphenylmethan mit 0,05 bis 0,3 Mol an Polypropylenglykolen eines unter 1000, vorzugsweise unter 700 liegenden Molekulargewichts zugänglich sind, Carbodiimid- und/oder Uretonimingruppen aufweisende Diisocyanate auf Basis von 4,4'-Diisocyanatodiphenylmethan oder Gemische derartiger modifizierter Diisocyanate. Die Diisocyanat-Komponente b) weist vorzugsweise einen NCO-Gehalt von 20 bis 30 Gew.-% auf.

Bei der Komponente c) handelt es sich um die aus der Polyurethanchemie an sich bekannten Polyetherpolyole mit 2 bis 4 primären und/oder sekundären, vorzugsweise überwiegend primären Hydroxylgruppen des Molekulargewichtsbereichs 500 bis 12 000, vorzugsweise 2000 bis 8000. Die Polyetherkomponente c) weist vorzugsweise eine (mittlere) Hydroxylfunktionalität von 2 bis 3 und ein (mittleres) Molekulargewicht 2000 bis 8000 auf. Oftmals werden als Komponente c) bzw. als Teil der Komponente c) auch durch Vinylpolymerisate modifizierte Polyether, wie sie z.B. durch Polymerisation von Styrol und Acrylnitril in Gegenwart von Polyethern entstehen (US-Patentschriften 3 383 351, 3 304 273, 3 523 093, 3 110 695 oder DE-PS 1 152 536) verwendet. Auch Polyetherpolyole, in welchen hochmolekulare Polyaddukte bzw. Polykondensate in feindisperser oder gelöster Form vorliegen, können als Komponente c) oder als Teil der Komponente c) verwendet werden.

Als Kettenverlängerer bzw. Vernetzer d) kommen d1) zwei- oder dreiwertige Alkohole des Molekulargewichtsbereichs 62 bis 499, vorzugsweise 62 bis 200 und gegebenenfalls d2) aromatische diprimäre Diamine des Molekulargewichtsbereichs 108 bis 350 in Betracht. Zu nennen sind aromatische Diamine der auch als Komponente a3) in Betracht kommenden Art.

3

EP 0 522 394 A2

Als Treibmittel e) wird Wasser verwendet.

Zu den gegebenenfalls mitzuverwendenden weiteren Hilfs- und Zusatzmitteln f) gehören beispielsweise
f1) andere, FCKW-freie Treibmittel, wie beispielsweise organische Carbonsäuren gemäß EP-A-0 372 292
oder Salze von Carbonsäuren gemäß EP-A-0 423 594.

Die Mitverwendung derartiger zusätzlicher Treibmittel neben dem Wasser ist allerdings nicht bevorzugt.

Weitere Hilfs- und Zusatzmittel f) sind
f2) die üblichen Katalysatoren für die Isocyanat-Polyadditionsreaktion, insbesondere zinnorganische
Verbindungen wie Zinn(II)-octoat, Dibutylzinndilaurat, Kaliumacetat, aminische Katalysatoren wie Dimethylbenzylamin, Triethylendiamin oder permethyliertes Hexamethylendiamin.

Weitere Hilfs- und Zusatzmittel f), die gegebenenfalls mitverwendet werden können, sind beispielsweise
Stabilisatoren, Flammschutzmittel, Pigmente, Füllstoffe, innere Formtrennmittel u. dgl..

Zur Herstellung der Formschaumstoffe werden die Ausgangskomponenten a) und c) bis f) zu einer
"Reaktivkomponente" bzw. einer "NCO-reaktiven Komponente" vermischt und diese mit der Polyisocyanatkomponente b) unter Einhaltung einer Isocyanatkennzahl von 70 bis 150, vorzugsweise 90 bis 110, zur
Reaktion gebracht.

Die erfindungswesentliche Komponente a) wird dabei im allgemeinen in einer solchen Menge eingesetzt, daß in der "Reaktivkomponente" 0,2 bis 2,5, vorzugsweise 0,5 bis 1,0 Gew.-% an Zinksalz a1),
bezogen auf das Gewicht der Komponente c) vorliegen. Außerdem beträgt im allgemeinen der Gesamtanteil
der aminischen Komponenten a2), a3) und d2) maximal 20 Gew.-%, bezogen auf das Gewicht der
Komponente d1). Die Komponente d1) wird ihrerseits in Mengen von 2 bis 15, vorzugsweise 4 bis 10 Gew.-
%, bezogen auf das Gewicht der Komponente c) eingesetzt. Das erfindungswesentliche Treibmittel e)
(Wasser) wird je nach angestrebter Dichte in einer Menge von 0,2 bis 2,0, vorzugsweise 0,5 bis 1,5 Gew.-
%, bezogen auf das Gewicht der Komponente c) verwendet.

Zur Vereinigung der "Reaktivkomponente" mit der Polyisocyanatkomponente erfolgt deren Durchmischung beispielsweise unter Verwendung von Rührwerksmischern oder vorzugsweise unter Verwendung der
üblichen Hochdruck-Mischaggregate, wie sie üblicherweise zur Herstellung von Polyurethanschaumstoffen
verwendet werden. Unmittelbar nach der Herstellung des Reaktionsgemisches erfolgt die Befüllung der
Form, wobei die Menge des in die Form eingetragenen Reaktionsgemisches der angestrebten Rohdichte
der Formkörper angepaßt wird.

Die Rohdichte der Formkörper liegt bei mindestens 200 kg/m$^3$, vorzugsweise bei 300 bis 500 kg/m$^3$.

Im allgemeinen beträgt die Temperatur der zur Anwendung gelangenden Formwerkzeuge mindestens
30°C, vorzugsweise mindestens 40°C. Die Temperatur der Rohstoffe wird im allgemeinen zwischen 20°C
und 40°C, vorzugsweise 23°C bis 30°C eingestellt. Die Innenwände der Werkzeuge werden vorzugsweise
vor der Befüllung mit an sich bekannten äußeren Formtrennmitteln beschichtet.

Die nachfolgenden Beispiele dienen der weiteren Erläuterung der Erfindung.

Beispiele

In den nachstehenden Beispielen wurden folgende Ausgangsmaterialien eingesetzt:

Polyether:

Polyetherpolyol des Molekulargewichts 5000, hergestellt durch Propoxylierung von Trimethylolpropan
und anschließende Ethoxylierung des Propoxylierungsprodukts (PO:EO-Gewichtsverhältnis = 85:15).

Katalysator 1

Bis-(3-dimethylaminopropyl)amin

Katalysator 2:

Permethyliertes Hexamethylendiamin

Schwarzpaste:

Handelsübliche Rußpaste

Zusatzmittel 1:

4

Lösung von 1 Gew.-Teil handelsüblichen Zinkstearats in 1 Gew.-Teil des Anlagerungsprodukts von 5 Mol Propylenoxid an 1 Mol Ethylendiamin.

Zusatzmittel 2:

Lösung von 1,8 Gew.-Teilen handelsüblichen Zinkstearats in 0,9 Gew.-Teilen Bis-(3-dimethylaminopropyl)amin und 2,0 Gew.-Teilen eines Gemischs aus 65 Gew.-% 1-Methyl-3,5-diethyl-2,4-diaminobenzol und 35 Gew.-% 1-Methyl-3,5-diethyl-2,6-diaminobenzol.

Zusatzmittel 3:

Lösung von 1 Gew.-Teil handelsüblichen Zinkstearats in 1 Gew.-Teil eines handelsüblichen Diaminopolyethers des Molekulargewichts 400, hergestellt durch Aminierung des entsprechenden Polypropylenglykols (®Jeffamine 400 der Firma Texaco).

Polyisocyanat:

Polyisocyanatgemisch mit einem NCO-Gehalt von 26,5 Gew.-%, bestehend aus einem Gemisch aus gleichen Gewichtsteilen (i) des Umsetzungsprodukts von 4,4'-Diisocyanatodiphenylmethan mit Tripropylenglykol im NCO/OH-Äquivalentverhältnis 4:1 und (ii) eines durch partielle Carbodiimidisierung modifizierten 4,4'-Diisocyanatodiphenylmethans.

Unter Verwendung der in nachstehender Tabelle 1 mitgeteilten Rezepturen wurden plattenförmige Schaumstoff-Formkörper hergestellt. Die Vermischung der Ausgangskomponenten erfolgte unter Verwendung eines üblichen Hochdruck-Mischaggregats (RSG-Verfahren). Als Formwerkzeug diente eine Plattenform der Abmessung 10 x 300 x 235 mm, deren Innenwände vorab mittels eines handelsüblichen Formtrennmittels (®Acmosil 180 ST, Hersteller: Acmos, D-2800 Bremen 1) beschichtet worden waren. Die Menge des jeweils in die Form eingetragenen Reaktionsgemisches wurde so bemessen, daß Rohdichten von 300 kg/m$^3$ bzw. 500kg/m$^3$ resultierten.

In der nachstehenden Tabelle 1 beziehen sich alle Zahlenangaben bezüglich der Zusammensetzung der Rezepturen auf Gewichtsteile. Die eingesetzte Polyisocyanatmenge entspricht einer NCO-Kennzahl von 100 (NCO-Kennzahl = Quotient aus Anzahl der Isocyanatgruppen der Polyisocyanatkomponente, dividiert durch Anzahl der in der Reaktivkomponente vorliegenden, gegenüber Isocyanatgruppen reaktionsfähigen Gruppen, multipliziert mit 100).

Die Beispiele 1a) und 1b) stellen Vergleichsbeispiele dar, da keine erfindungswesentlichen Zusatzmittel mitverwendet worden sind. In diesen Vergleichsbeispielen resultierten Schaumstoffe einer weitgehend homogenen Dichteverteilung ohne nennenswerte Ausbildung einer kompakten Randzone. In den erfindungsgemäßen Beispielen 2a) bis 4b) resultierten jeweils Integralschaumstoffe mit einer deutlich ausgebildeten, kompakten Randzone. Weitere Einzelheiten können der nachstehenden Tabelle entnommen werden.

In der nachstehenden Tabelle 2 werden die mechanischen Eigenschaften der Schaumstoff-Förmkörper mitgeteilt.

5

Tabelle 1

| Beispiel | 1a | 1b | 2a | 2b | 3a | 3b | 4a | 4b |
|---|---|---|---|---|---|---|---|---|
| Polyether | 100 | 100 | 100 | 100 | 100 | 100 | 100 | 100 |
| Ethylenglykol | 5,5 | 5,5 | 5,5 | 5,5 | 5,5 | 5,5 | 5,5 | 5,5 |
| Katalysator 1 | 0,5 | 0,5 | 0,5 | 0,5 | 0,5 | 0,5 | 0,5 | 0,5 |
| Katalysator 2 | 0,5 | 0,5 | 0,5 | 0,5 | 0,5 | 0,5 | 0,5 | 0,5 |
| Wasser | 1,0 | 1,0 | 1,0 | 1,0 | 1,0 | 1,0 | 1,0 | 1,0 |
| Schwarzpaste | 5 | 5 | 5 | 5 | 5 | 5 | 5 | 5 |
| Zusatzmittel 1 | - | - | 1,5 | 1,5 | - | - | - | - |
| Zusatzmittel 2 | - | - | - | - | 1,5 | 1,5 | - | - |
| Zusatzmittel 3 | - | - | - | - | - | - | 1,5 | 1,5 |
| Polyisocyanat | 51 | 51 | 52 | 52 | 52 | 52 | 51 | 51 |

Alle Zahlen beziehen sich auf Gewichtsteile

Tabelle 2

| Beispiel | | 1a | 1b | 2a | 2b | 3a | 3b | 4a | 4b |
|---|---|---|---|---|---|---|---|---|---|
| Rohdichte 10 mm Pl. | (kg/m³) | 300 | 490 | 308 | 507 | 311 | 505 | 312 | 492 |
| Rohdichte 3 mm Haut | (kg/m³) | 305 | 526 | 355 | 555 | 342 | 549 | 336 | 547 |
| Zugfestigkeit | (MPa) | 1,4 | 2,7 | 1,6 | 3,2 | 1,8 | 3,6 | 1,4 | 3,0 |
| Reißdehnung | (%) | 166 | 153 | 171 | 180 | 187 | 207 | 139 | 200 |
| Weiterreißfestigkeit | (kN/m) | 3,1 | 5,4 | 3,7 | 6,4 | 4,3 | 7,3 | 4,0 | 6,7 |
| Shore-Härte A | | 30 | 53 | 31 | 55 | 34 | 57 | 35 | 51 |
| Thermoabrieb | | - | - | + | + | + | ++ | + | ++ |

Wie ein Vergleich der Rohdichte der Formkörper mit der Rohdichte einer 3 mm (abgeschälten) Haut zeigt, ist bei den erfindungsgemäßen Beispielen die Rohdichtedifferenz deutlich ausgeprägt. Die Werte für Zugfestigkeit, Bruchdehnung und Weitetreißfestigkeit wurden ebenfalls an einer 3 mm Haut ermittelt und zeigen deutlich den positiven Einfluß der erfindungsgemäßen Zusatzmittel.

Zur Bestimmung des Thermoabriebs wurden Prüfkörper der Abmessung 60 x 40 x 10 mm durch ein mit Merino-Wollfilz beschichtetes Reibrad (Durchmesser 100 mm, Breite 31 mm) mit unterschiedlichen Reibzeiten belastet. Die Stärke des Abriebs der Prüfkörper nach der Prüfung wurde visuell beurteilt. Während die Vergleichsbeispiele deutliche Vertiefungen durch Materialverlust an der Oberfläche aufweisen, zeigen die erfindungsgemäßen Beispiele erheblich weniger Abrieb.

**Patentansprüche**

7

1. Verwendung von

    a) Lösungen von

        a1) 100 Gew.-Teilen einer Zinksalzkomponente, bestehend aus mindestens einem Zinksalz einer geradkettigen oder verzweigten, gesättigten oder ungesättigten Fettsäure mit 8 bis 24 Kohlenstoffatomen in

        a2) 40 bis 200 Gew.-Teilen einer aliphatischen Aminkomponente, bestehend aus mindestens einem aliphatischen Polyamin des Molekulargewichtsbereichs 131 bis 500 mit insgesamt 2 bis 4 primären, sekundären und/oder tertiären Aminstickstoffatomen, und gegebenenfalls

        a3) bis zu 200 Gew.-Teilen einer aromatischen Aminkomponente, bestehend aus mindestens einem Diamin mit aromatisch gebundenen primären Aminogruppen des Molekulargewichtsbereichs 108 bis 350,

als die Ausbildung einer kompakten Oberfläche bewirkende Zusatzmittel bei der Herstellung von Formschaumstoffen einer maximalen Rohdichte von 500 kg/m$^3$ mit kompakter Randzone durch Formverschäumung eines Reaktionsgemischs, bestehend im wesentlichen aus

    b) einer Polyisocyanatkomponente, bestehend aus mindestens einem Polyisocyanat mit aromatisch gebundenen Isocyanatgruppen,

    c) einer Polyetherkomponente, bestehend aus mindestens einem Polyetherpolyol mit 2 bis 4 alkoholischen Hydroxylgruppen und einem Molekulargewicht von 500 bis 12 000,

    d) einer Kettenverlängerer- oder Vernetzerkomponente, bestehend aus

        d1) mindestens einem zwei- oder dreiwertigen, gegebenenfalls Ethergruppen aufweisenden Alkohol mit primären und/oder sekundären Hydroxylgruppen des Molekulargewichtsbereichs 62 bis 499 und gegebenenfalls

        d2) mindestens einem oder aromatischen diprimären Diamin des Molekulargewichtsbereichs 108 bis 350.

    e) Wasser, sowie gegebenenfalls

    f) weiteren Hilfs- und Zusatzmitteln,

wobei die Komponenten a) und c) bis f) zu einer NCO-reaktiven Komponente vereinigt und diese mit der Polyisocyanatkomponente b) unter Einhaltung einer Isocyanatkennzahl von 70 bis 150 zur Reaktion gebracht wird.

2. Verwendung gemäß Anspruch 1, dadurch gekennzeichnet, daß die Menge der Komponente a) so bemessen wird, daß der Gehalt der NCO-reaktiven Komponente an Zinksalzen a1) bei 0,2 bis 2,5 Gew.-%, bezogen auf das Gewicht der Komponente c), liegt.

3. Verwendung gemäß Anspruch 1 und 2, dadurch gekennzeichnet, daß die Gesamtmenge der Komponenten a2), a3) und d2) bei maximal 20 Gew.-%, bezogen auf das Gewicht der Komponente d1) liegt.

4. Verwendung gemaß Anspruch 1 bis 3, dadurch gekennzeichnet, daß die Komponente d1) in einer Menge von 2 bis 15 Gew.-%, bezogen auf das Gewicht der Komponente c) zum Einsatz gelangt.

5. Verwendung gemäß Anspruch 1 bis 4, dadurch gekennzeichnet, daß das als Treibmittel verwendete Wasser in einer Menge von 0,5 bis 1,5 Gew.-%, bezogen auf das Gewicht der Komponente c) zum Einsatz gelangt.